Europäisches Patentamt

European Patent Office

Office européen des brevets

(11) Veröffentlichungsnummer: **0 268 043 B1**

# (12) EUROPÄISCHE PATENTSCHRIFT

(45) Veröffentlichungstag der Patentschrift: **29.01.92**

(21) Anmeldenummer: **87114018.2**

(22) Anmeldetag: **25.09.87**

(51) Int. Cl.⁵: **H05B 41/392**

(54) Gleichspannungsversorgungsschaltung für Leuchtstofflampen.

(30) Priorität: **15.11.86 DE 3639116**

(43) Veröffentlichungstag der Anmeldung:
**25.05.88 Patentblatt 88/21**

(45) Bekanntmachung des Hinweises auf die
Patenterteilung:
**29.01.92 Patentblatt 92/05**

(84) Benannte Vertragsstaaten:
**AT BE CH DE ES FR GB GR IT LI LU NL SE**

(56) Entgegenhaltungen:
**FR-A- 1 393 007**
**US-A- 4 356 432**

(73) Patentinhaber: **TRILUX-LENZE GmbH & Co. KG**
**Neheim-Hüsten**
**W-5760 Arnsberg 1(DE)**

(72) Erfinder: **Mertens, Ferdinand, Dipl.-Ing.**
**Samlandweg 4**
**W-5760 Arnsberg 1(DE)**
Erfinder: **Hasemann, Fred, Dr.-Ing.**
**Zum Golfplatz 6**
**W-5760 Arnsberg 1(DE)**
Erfinder: **Wittig, Norbert, Dipl.-Ing.**
**Mühlenberg 62a**
**W-5760 Arnsberg 1(DE)**

(74) Vertreter: **Selting, Günther et al**
**Patentanwälte Von Kreisler-**
**Schönwald-Fues-Keller Selting-Werner**
**Deichmannhaus am Hauptbahnhof**
**W-5000 Köln 1(DE)**

**Beschreibung**

Die Erfindung betrifft eine Gleichspannungsversorgungsschaltung für Leuchtstofflampen nach dem Oberbegriff des Patentanspruchs 1.

Elektronische Vorschaltgeräte für Leuchtstofflampen benötigen eine Gleichspannungsversorgung, wobei die vom Netz zur Verfügung gestellte Wechselspannung in eine konstante Gleichspannung umgesetzt wird. Bei Gleichrichterschaltungen kann Energie nur dann aus dem Netz entnommen werden, wenn die Netz-Eingangsspannung größer ist als die Ausgangsspannung. Dies bewirkt kurzzeitige Stromspitzen, die das Netz unzulässig belasten. Um bestehende Vorschriften zu erfüllen, wird überlicherweise eine Filterschaltung aus Induktivität und Kapazität vorgeschaltet.

Diese Filterschaltung ist ein Tiefpaß mit einer der Netzfrequenz entsprechenden Grenzfrequenz. Da die Netzfrequenz relativ niedrig ist, muß die Drossel eine große Induktivität haben, was bei entsprechender Leistungsaufnahme des Verbrauchers zu einer großformatigen Drossel mit hohem Eisenanteil und entsprechend großen Abmessungen und hohem Gewicht führt.

Zur Vermeidung eines Tiefpaßfilters mit aufwendiger Drossel ist es bekannt, in einer Gleichspannungsversorgungsschaltung für Leuchtstofflampen einen Sperrwandler zu benutzen (DE-OS 30 25 405), der eine Spule mit relativ geringer Induktivität aufweist, welche durch einen Schalter periodisch mit dem Ausgang einer Gleichrichterschaltung verbunden und anschließend über einen Gleichrichter auf einen Kondensator entladen wird. In der Leitendphase des Schalters wird die Induktivität aufgeladen und in der Sperrphase des Schalters wird die Induktivität auf den Kondensator entladen, wodurch die Spannung am Kondensator, d.h. die Ausgangsspannung des Sperrwandlers, ansteigt. Andererseits wird die Kondensatorspannung durch den Verbraucher ständig entladen. Die Frequenz, mit der der Schalter umgeschaltet wird, ist viel höher als die Netzfrequenz, so daß die Umhüllende der nadelförmigen Aufladungsstromimpulse einen der Sinusform der gleichgerichteten Netzspannung folgenden zeitlichen Verlauf hat. Um zu vermeiden, daß durch die nadelförmigen Stromimpulse hochfrequente Störungen in das Versorgungsnetz gelangen, benötigt man eine relativ einfache Filterschaltung mit einer kleinen Induktivität.

Bei der bekannten Gleichspannungsversorgungsschaltung ist der Sperrwandler ein Hochsetzsteller, bei dem die Induktivität in einer Eingangsleitung liegt, während der Schalter in einem Querzweig zwischen den Eingangsleitungen angeordnet ist. Die Induktivität ist über die Diode mit einer Ausgangsleitung des Sperrwandlers verbunden. Bei hohem Strombedarf des Verbrauchers kann dieser Strom über die Reihenschaltung aus Induktivität und Diode direkt aus der Gleichrichterschaltung fließen. Andererseits besteht die Gefahr, daß Überspannungen des Versorgungsnetzes über die genannte Reihenschaltung direkt auf den Verbraucher durchschlagen und Bauelemente des Verbrauchers gefährden. Solche Überspannungen können aus kurzzeitigen Spannungsspitzen bestehen oder auch durch Fehlschaltungen hervorgerufen werden. Wenn die Versorgungsschaltung an eine zu hohe Spannung angeschlossen wird, dringt diese bis zum Verbraucher durch. Ein weiterer Nachteil des bekannten Sperrwandlers besteht darin, daß die Frequenz, mit der der die Induktivität umladende Schalter gesteuert wird, vom zeitlichen Verlauf des Entladestroms abhängig ist, der seinerseits von der Differenz zwischen Ausgangsspannung und Eingangsspannung des Sperrwandlers abhängt. Der Schalter sollte zur Vermeidung von Verlusten dann leitend geschaltet werden, wenn der Entladestrom der Induktivität den Wert Null erreicht. Die Zeit, die hierzu benötigt wird, hängt von der Differenz zwischen Ausgangs- und Eingangsspannung ab. Bei konstanter Ausgangsspannung variiert diese Differenz entsprechend dem zeitlichen Verlauf der Eingangsspannung, bei der es sich um eine gleichgerichtete Wechselspannung handelt.

Der Erfindung liegt die Aufgabe zugrunde, eine Gleichspannungsversorgungsschaltung der im Oberbegriff des Patentanspruchs 1 angegebenen Art zu schaffen, die für einen weiten Bereich von Eingangsspannungen geeignet ist und bei der der angeschlossene Verbraucher, nämlich das die Leuchtstofflampe versorgende Vorschaltgerät, gegen Überspannungen geschützt ist.

Die Lösung dieser Aufgabe erfolgt erfindungsgemäß mit den im kennzeichnenden Teil des Patentanspruchs 1 angegebenen Merkmalen.

Nach der Erfindung ist in einer Eingangsleitung des Sperrwandlers ein elektronischer Schalter vorgesehen, der in Abhängigkeit von der Ausgangsspannung des Sperrwandlers gesteuert ist und in den Sperrzustand versetzt wird, wenn die Ausgangsspannung einen vorgegebenen Schwellenwert übersteigt. Der Sperrwandler wird also abgeschaltet, solange seine Ausgangsspannung, die als Eingangsspannung dem angeschlossenen Verbraucher zugeführt wird, zu hoch ist. Der zur Spannungsbegrenzung dienende Schalter wirkt nicht lediglich als Sicherung, die das Gerät im Fall einer Überspannung außer Funktion setzt, sondern er hat auch eine Regelfunktion, weil er selbsttätig wieder in den leitenden Zustand versetzt wird, wenn die Ausgangsspannung des Sperrwandlers unter den Schwellenwert abgeklungen ist. Der Sperrwandler wird im Fall einer Überspannung nur vorübergehend abgeschaltet. Wenn die Überspannung ein kurzzeitiger Störimpuls ist, wird dieser gewissermaßen herausgefiltert. Wenn die Überspannung dagegen aus einer zu hohen Netzspannung resultiert, bewirkt der Schalter ein dauerndes Abschalten, bis die Netzspannung wieder zulässige Werte erreicht.

Ferner ist der Betrieb sowohl mit Gleichspannung als auch mit Wechselspannung möglich.

Eine bevorzugte Ausbildung des Sperrwandlers ist in Patentanspruch 2 angegeben. Bei diesem Sperrwandler liegt der die Aufladung und Entladung der Induktivität steuernde Schalter in einer Eingangsleitung. Dieser Schalter wird zusätzlich für die Regelung der Ausgangsspannung des Sperrwandlers mitbenutzt, so daß mit demselben Schalter zwei verschiedene Funktionen ausgeführt werden, nämlich die Steuerung der Aufladung und Entladung der Induktivität und zusätzlich die Regelung der Ausgangsspannung des Sperrwandlers. Es wird also nur ein einziger elektronischer Schalter benötigt, der den Kondensator des Sperrwandlers mit einem Pol der Versorgungsspannung verbindet. Wenn dieser Schalter gesperrt ist, ist die Verbindung zwischen dem Verbraucher und der Versorgungsspannung vollständig unterbrochen, so daß der Verbraucher ausschließlich mit der im Kondensator und in der Induktivität des Sperrwandlers gespeicherten Energie versorgt werden kann.

Zusätzlich zu oder anstelle der Regelung der Ausgangsspannung kann der zur Spannungsbegrenzung dienende Schalter noch weitere Begrenzungsfunktionen übernehmen, die in den Patentansprüchen 3 und 4 angegeben sind, nämlich eine Begrenzung des vom Sperrwandler aufgenommenen Eingangsstroms und eine Begrenzung der Eingangsspannung des Sperrwandlers. Die Begrenzungsfunktionen werden nach Art einer ODER-Bedienung ausgeführt, d.h. wenn einer der gemessenen Werte seinen zugehörigen Schwellenwert übersteigt, unterbricht der Schalter eine der Leitungen, über die der Sperrwandler an die Versorgungsspannung angeschlossen ist.

Vorteilhafte Ausgestaltungen und Weiterbildungen der Erfindung sind den Unteransprüchen 5 bis 7 zu entnehmen.

Im folgenden werden Ausführungsbeispiele der Erfindung unter Bezugnahme auf die Zeichnungen näher erläutert.

Es zeigen:

Fig. 1    ein Blockschaltbild eines ersten Ausführungsbeispiels, bei dem der Sperrwandler ein Hochsetzsteller ist,

Fig. 2    die zeitlichen Verläufe der Eingangsspannung und des Spulenstroms bei dem Sperrwandler nach Fig. 1,

Fig. 3    in geändertem Zeitmaßstab die zeitlichen Verläufe des Spulenstroms und der Spulenspannung,

Fig. 4    ein Blockschaltbild eines Sperrwandlers, der als Schaltregler mit Spannungsumkehr ausgebildet ist,

Fig. 5    ein Schaltbild der Regelschaltung des Sperrwandlers von Fig. 4 und

Fig. 6    verschiedene zeitliche Verläufe des Spulenstroms in Abhängigkeit von der Amplitude der Versorgungsspannung bei den Ausführungsbeispielen der Fig. 1 und 4.

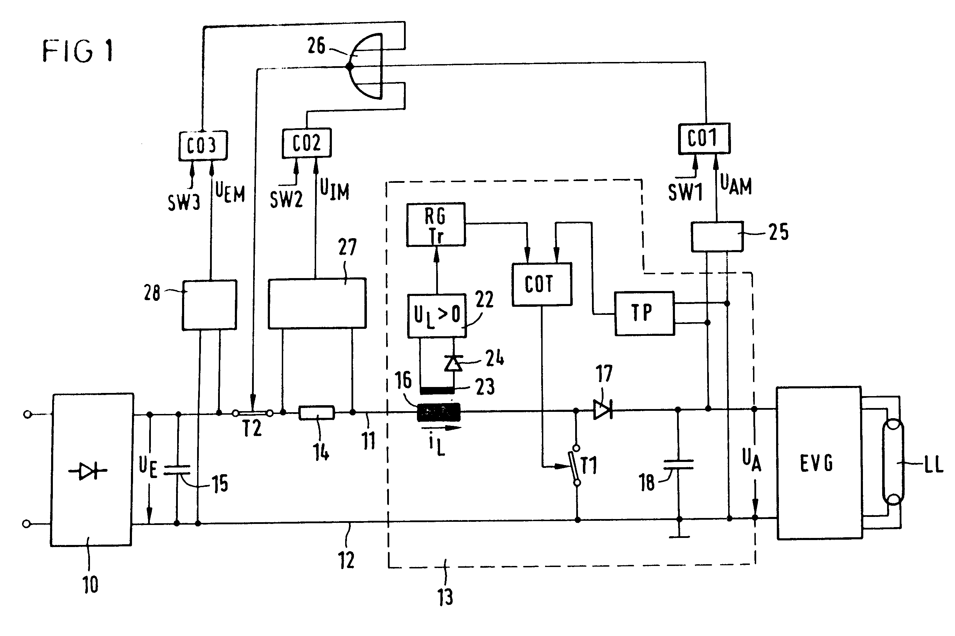

Gemäß Fig. 1 ist eine Gleichrichterschaltung 10 vorgesehen, die als Doppelweggleichrichter ausgebildet ist und deren Eingang über ein (nicht dargestelltes) Hochfrequenzfilter mit der Netzspannung von z.B. 220 V und 50 Hz verbunden ist. Am Ausgang der Gleichrichterschaltung 10 entsteht eine gleichgerichtete Wechselspannung, die im folgenden als Eingangsspannung $U_E$ bezeichnet wird. Die Eingangsspannung $U_E$ liegt zwischen den beiden Eingangsleitungen 11 und 12 des Sperrwandlers 13. Die eine Eingangsleitung 11 enthält eine Reihenschaltung aus einem elektronischen Schalter T2, z.B. einem Transistor, und einem niederohmigen Strommeßwiderstand 14. Die Eingangsleitung 12 des Sperrwandlers 13 ist mit Massepotential verbunden. Zwischen die Ausgangsleitungen der Gleichrichterschaltung 10 ist ein Kondensator 15 geschaltet.

Am Ausgang des Sperrwandlers 13 entsteht in noch zu erläuternder Weise die Ausgangsspannung $U_A$, die eine Gleichspannung ist, mit der das elektronische Vorschaltgerät EVG einer Leuchtstofflampe LL versorgt wird. Das elektronische Vorschaltgerät EVG kann in gleicher Weise ausgebildet sein, wie das in DE-PS 35 17 297 beschriebene Vorschaltgerät, bei dem die Steuerung des Lampenstroms mit einem Schaltregler erfolgt. Es können aber auch solche Vorschaltgeräte benutzt werden, die zur Lampenversorgung einen Wechselrichter und einen angeschlossenen Schwingkreis enthalten. Das elektronische Vorschaltgerät EVG stellt lediglich einen Verbraucher dar, der mit einer Gleichspannung bestimmter Größe versorgt wird.

Die Eingangsleitung 11 des Sperrwandlers 13 ist über die Reihenschaltung aus der Induktivität 16 und der in Durchlaßrichtung gepolten Diode 17 mit dem einen Pol des Vorschaltgeräts EVG verbunden. Die Eingangsleitung 12 ist direkt mit dem anderen Pol des Vorschaltgeräts EVG verbunden. Der Verbindungspunkt zwischen Induktivität 16 und Diode 17 ist über einen elektronischen Schalter T1 mit der Eingangsleitung 12 verbunden. Die elektronischen Schalter T1 und T2 sind aus Gründen der Einfachheit als mechanische Schalter dargestellt; es handelt sich vorzugsweise um Transistoren.

Die Kathode der Diode 17 ist an einen Kondensator 18 angeschlossen, dessen anderer Anschluß mit Massepotential verbunden ist. Am Kondensator 18 entsteht die Ausgangsspannung $U_A$.

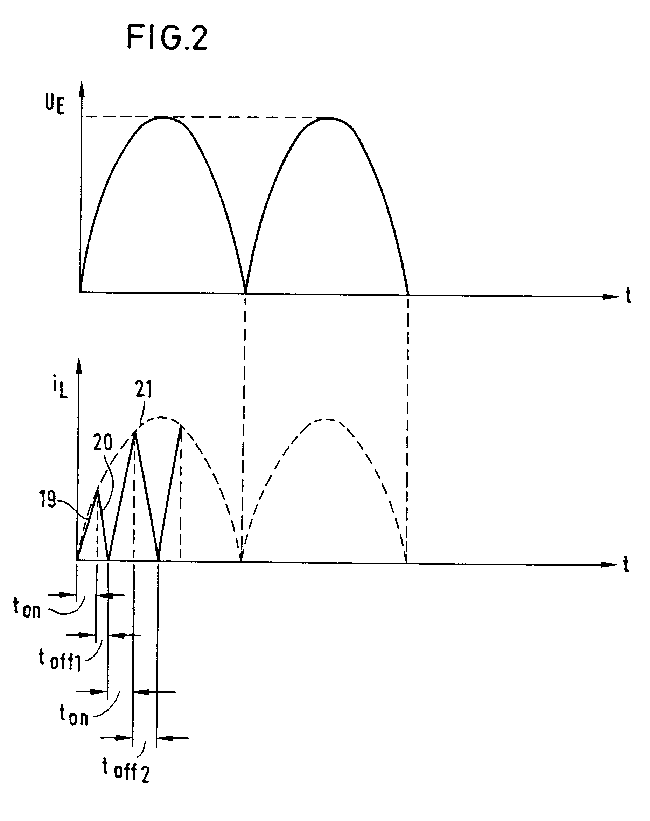

Der Schalter T1 wird während jeder Halbperiode der Eingangsspannung $U_E$ viele Male abwechselnd in den leitenden Zustand und den Sperrzustand gesteuert. In Fig. 2 ist der zeitliche Verlauf der Eingangsspannung $U_E$ dargestellt, bei der es sich um eine gleichgerichtete Wechselspannung handelt. Zusätzlich ist in Fig. 2 der zeitliche Verlauf des Spulenstromes $i_L$ abgebildet, wobei aus Gründen der Übersichtlichkeit nur wenige Stromimpulse innerhalb einer Halbwelle der Eingangsspannung $U_E$ dargestellt sind. In Wirklichkeit ist die Frequenz der Impulse des Spulenstroms $i_L$ wesentlich höher, so daß innerhalb einer Halbwelle der Eingangsspannung eine große Vielzahl dreieckförmiger Impulse des Spulenstroms $i_L$ auftritt.

Aus Fig. 2 erkennt man, daß jeweils während der Einschaltzeit $t_{on}$, in der der Schalter T1 leitend ist, eine linear ansteigende Flanke 19 des Spulenstroms entsteht, während in der darauffolgenden Auszeit $t_{off}$ eine linear abfallende Flanke 20 entsteht, in der der Spulenstrom bis auf den Wert Null absinkt. Die Höhe der Impulse ist abhängig von der Spannung $U_E$ zum Zeitpunkt des jeweiligen Impulses. Daher ist die Umhüllende 21 der Stromimpulse proportional zum zeitlichen Verlauf der Spannung $U_E$.

Die Einschaltzeiten $t_{on}$ werden von der Höhe der Ausgangsspannung $U_A$ bestimmt. Diese Ausgangsspannung wird einem Tiefpaßfilter TP zugeführt, das ein der Ausgangsspannung entsprechendes Signal dem einen Eingang eines Komparators COT zuführt. Dem anderen Eingang des Komparators COT wird das zeitlich linear ansteigende Rampensignal eines Rampengenerators RG zugeführt. Wenn das Signal des Rampengenerators RG die Höhe des Ausgangssignals des Tiefpaßfilters TP erreicht, schaltet der Komparator COT den Schalter T1 in den nichtleitenden (gesperrten) Zustand. Der Rampengenerator RG wird durch ein Triggersignal Tr an seinem Triggereingang in Funktion gesetzt, wodurch mit der Erzeugung des linear ansteigenden Spannungssignals begonnen wird. Das Triggersignal Tr wird von einer Detektorschaltung 22 erzeugt, die mit einer Sekundärwicklung 23 der Induktivität 16 über eine Diode 24 verbunden ist. Immer dann, wenn der Entladestrom der Induktivität 16 den Wert Null angenommen hat, wird das Triggersignal Tr erzeugt und von diesem Zeitpunkt an wird der Schalter T1 im leitenden Zustand gehalten, bis das Signal des Rampengenerators RG die Amplidute des Ausgangssignals des Tiefpasses TP erreicht hat. Der Rampengenerator RG bildet zusammen mit dem Komparator COT einen Zeitgeber, der in Abhängigkeit von der Ausgangsspannung $U_A$ die Dauer der Einschaltzeit $t_{on}$ festlegt. Die Zeitkonstante des Tiefpasses TP entspricht mindestens der Dauer einer Halbperiode der Eingangsspannung $U_E$, so daß die Dauer der Einschaltzeit $t_{on}$ innerhalb einer Halbperiode als konstant angenommen werden kann. Die Einschaltzeit ändert sich also bei kurzzeitigen Änderungen der Ausgangsspannung $U_A$ nicht.

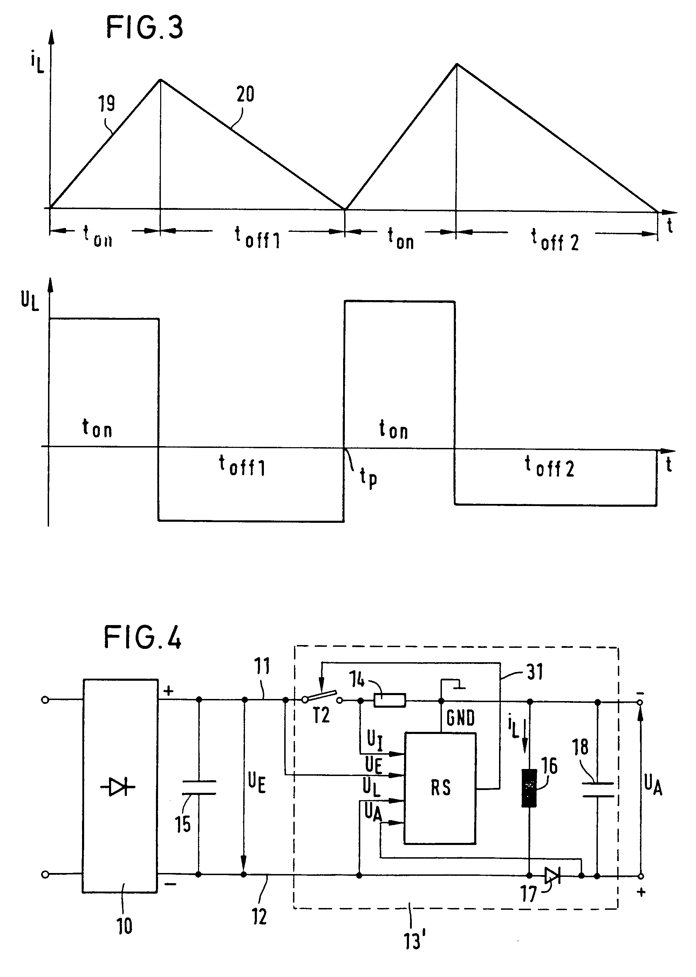

Dagegen ändert sich die Dauer der Auszeit $t_{off}$, die bei nicht leitendem Schalter T1 benötigt wird, um die Spule 16 über die Diode 17 auf den Kondensator 18 zu entladen. Die Dauer des Entladestroms, der der Rückflanke 20 des Stromimpulses entspricht (Fig. 2 und 3), hängt von der Größe der Augenblicksamplitude der Eingangsspannung $U_E$ ab. Man erkennt, daß bei zwei aufeinanderfolgenden Stromimpulsen während des ansteigenden Asts der Eingangsspannung $U_E$ die Auszeit $t_{off2}$ des nachfolgenden Stromimpulses größer ist als die Auszeit $t_{off1}$ des vorhergehenden Stromimpulses. Dies liegt daran, daß die Maximalwerte des Stroms $i_L$ unterschiedlich sind.

Die Spannung $U_L$ der Induktivität 16 ist während der Einschaltzeiten $t_{on}$ positiv, wobei die Amplitude ebenfalls von der Augenblicksamplitude der Eingangsspannung $U_E$ abhängt. Wenn der Schalter T1 in den nicht leitenden Zustand gesteuert wird (während der Auszeiten $t_{off}$), kehrt sich die Polarität der Spannung $U_L$ um, wobei die Amplitude der sich ergebenden negativen Spannungsimpulse ebenfalls von der Augenblicksamplitude der Eingangsspannung abhängt. Wenn zum Zeitpunkt $t_p$ der Stromimpuls beendet ist und die Amplitude der Spannung $U_L$, die vorher negativ war, Null wird, wird dies von dem Spannungsdetektor 22 erkannt, der daraufhin das Triggersignal Tr erzeugt und den Beginn des nächsten Stromimpulses einleitet.

Die Ausgangsspannung $U_A$ des Sperrwandlers 13 wird einem Spannungsumsetzer 25 zugeführt, der ein der Ausgangsspannung proportionales Meßsignal $U_{AM}$ erzeugt, das dem einen Eingang des Komparators CO1 zugeführt wird. Der andere Eingang des Komparators CO1 empfängt ein Schwellenwertsignal SW1, das beispielsweise an einem Potentiometer eingestellt ist. Der Komparator CO1 erzeugt ein Ausgangssignal, wenn das Meßsignal $U_{AM}$ die Höhe des Schwellenwertsignals SW1 übersteigt. Dieses Ausgangssignal wird einem Eingang eines NOR-Gatters 26 zugeführt, dessen Ausgang den elektronischen Schalter T2 steuert. Wenn einer der Eingänge des NOR-Gatters 26 "1"-Signal empfängt, wird das Ausgangssignal dieses Gatters "0", wodurch der Schalter T2 in den nicht leitenden Zustand gesteuert wird. Nur wenn alle Eingänge des NOR-Gatters 26 "0"-Signal empfangen, wird am Ausgang dieses Gatters ein "1"-Signal erzeugt, wodurch der Schalter T2 im leitenden Zustand gehalten wird.

Der Spulenstrom $i_L$ erzeugt am Meßwiderstand 14 einen Spannungsabfall, der von dem Umsetzer 27 in ein Strommeßsignal $U_{IM}$ umgesetzt wird, welches dem einen Eingang eines Komparators CO2 zugeführt wird. Der andere Eingang des Komparators CO2 empfängt ein voreingestelltes Schwellenwertsignal SW2. Wenn das Meßsignal $U_{IM}$ den Wert SW2 übersteigt, erzeugt der Komparator CO2 ein Ausgangssignal, das einem weiteren Eingang des NOR-Gatters 26 zugeführt wird.

Die Spannung $U_E$ wird einem Spannungsumsetzer 28 zugeführt, der ein dieser Spannung entsprechendes Meßsignal $U_{EM}$ an einen Komparator CO3 liefert. Der andere Eingang des Komparators CO3 empfängt ein voreingestelltes Schwellenwertsignal SW3. Der Komparator CO3 erzeugt ein Ausgangssignal, wenn das Meßsignal $U_{EM}$ den Schwellenwert SW3 übersteigt. Dieses Ausgangssignal wird an einen dritten Eingang des NOR-Gatters 26 geliefert.

Beim Betrieb des Sperrwandlers ist der Schalter T2 normalerweise leitend, während der Schalter T1 in der beschriebenen Weise während jeder Halbperiode der Eingangsspannung $U_E$ häufig umgeschaltet wird, um am Kondensator 18 die Ausgangsspannung $U_A$ zu erzeugen.

Wird das Gerät an eine zu hohe Versorgungsspannung angeschlossen oder gelangt über die Versorgungsspannung ein kurzzeitiger hoher Spannungsimpuls an das Gerät, dann wird dies durch den Komparator CO3 erkannt und über das NOR-Gatter 26 wird unverzüglich der in der Eingangsleitung 11 liegende Schalter T2 in den Sperrzustand (nicht leitenden Zustand) gesteuert, so daß der Sperrwandler 13 abgeschaltet wird, bis die Spannung $U_E$ wieder unter den durch SW3 vorgegebenen Schwellenwert abgefallen ist. In gleicher Weise wird der Schalter T2 gesperrt, wenn der Spulenstrom $i_L$ einen vorgegebenen Wert übersteigt oder wenn die Ausgangsspannung $U_A$ einenvorgegebenen Schwellenwert übersteigt.

Bei dem Ausführungsbeispiel der Fig. 4 ist der Sperrwandler 13' ein Schaltregler mit Spannungsumkehr. Dies bedeutet, daß die Ausgangsspannung $U_A$ die umgekehrte Polarität der Eingangsspannung $U_E$ hat. An die Eingangsleitung 11 ist über eine Reihenschaltung aus dem elektronischen Schalter T2 und dem Meßwiderstand 14 der eine Pol des Kondensators 18 angeschlossen, an welchem die Ausgangsspannung $U_A$ entsteht. Der andere Pol des Kondensators 18 ist mit der Kathode der Diode 17 verbunden, deren Anode an die Eingangsleitung 12 angeschlossen ist. Die Induktivität (Spule) 16 ist mit einem Ende mit dem Minuspol der Ausgangsspannung $U_A$ verbunden. Dieses Ende ist an Massepotential angeschlossen. Das andere Ende der Induktivität ist mit der Anode der Diode 17 verbunden.

Bei leitendem Schalter T2 wird die Induktivität 16 über den Meßwiderstand 14 vom Gleichrichter 10 aufgeladen, wobei ein linearer Anstieg des Spulenstroms $i_L$ erfolgt. Wird der Schalter T2 nichtleitend, dann versucht die Induktivität 16 den Spulenstrom aufrechtzuerhalten. Da dies nur durch einen Stromfluß durch die Reihenschaltung aus Kondensator 18 und Diode 17 möglich ist, fließt der Spulenstrom auf den Kondensator 18, der hierdurch aufgeladen wird.

Der Sperrwandler 13' enthält eine Regelschaltung RS, die mit Massepotential als Bezugspotential verbunden ist. Der Regelschaltung RS werden die folgenden Potentiale zugeführt: Die stromabhängige Spannung $U_i$ am Meßwiderstand 14, die Eingangsspannung $U_E$ der Eingangsleitung 11, die Spulenspannung $U_L$ der Eingangsleitung 12, die mit dem einen Ende der Spule 16 verbunden ist, und die Ausgangsspannung $U_A$ am Verbindungspunkt zwischen Kondensator 18 und Diode 17. Alle diese Potentiale repräsentieren Spannungen in bezug auf Massepotential, so daß die Potentiale der Regelschaltung RS unmittelbar zugeführt werden können, ohne Zwischenschaltung von potentialtrennenden Elementen wie Optokopplern u.dgl..

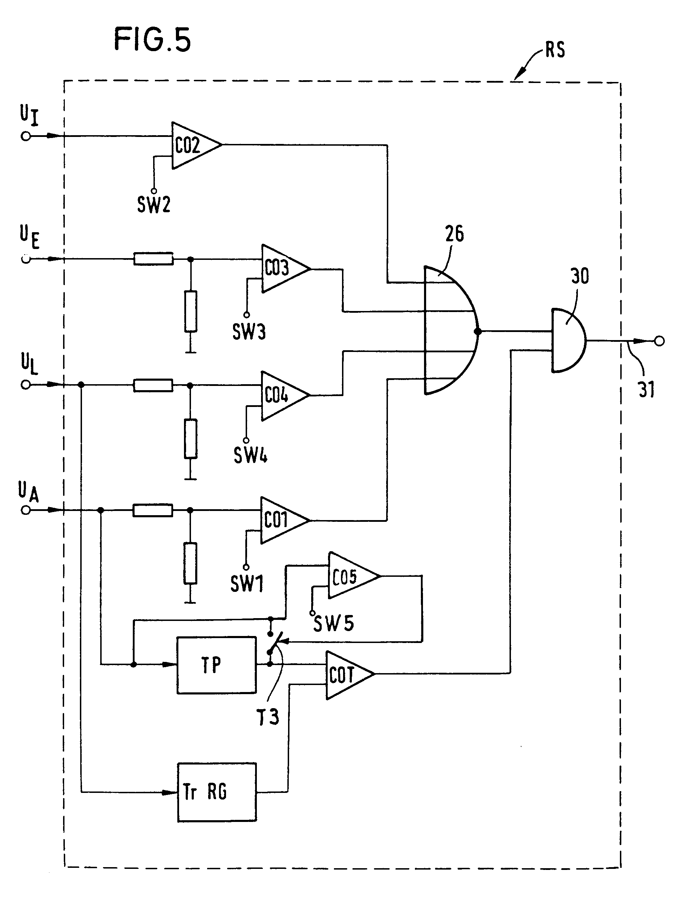

Die in Fig. 5 dargestellte Regelschaltung RS steuert den Schalter T2. Die Regelschaltung RS enthält einen Rampengenerator RG, der durch die Spulenspannung $U_L$ getriggert wird, wenn der Spulenstrom nach einem Impuls auf Null abgefallen ist. Dann erzeugt der Rampengenerator RG eine linear ansteigende Rampenspannung, die dem Komparator COT zugeführt wird. Dem anderen Eingang des Komparators COT wird über den Tiefpaß TP die Ausgangsspannung $U_A$ zugeführt. Der Komparator COT erzeugt vom Triggersignal an ein Ausgangssignal "1", bis das Signal des Rampengenerators RG die Höhe des Ausgangssignals des Tiefpasses TP erreicht hat. Dieses Ausgangssignal wird über ein UND-Tor 30 der Steuerleitung 31 für den Schalter T2 zugeführt. Wenn das Signal an der Steuerleitung 31 "1" ist, wird der Schalter T2 in den leitenden Zustand gesteuert. Wenn das Signal an der Steuerleitung 31 "0" ist, wird der Schalter T2 in den nicht leitenden Zustand gesteuert.

Dem zweiten Eingang des UND-Tors 30 wird das Ausgangssignal des NOR-Gatters 26 zugeführt. Dieses Ausgangssignal ist nur "1", wenn alle Eingangssignale des NOR-Gatters "0" sind.

Dem einen Eingang des NOR-Gatters 26 wird das Ausgangssignal eines Komparators CO1 zugeführt, der an einem Eingang die Ausgangsspannung $U_A$ und an seinem Referenzeingang einen Schwellenwert SW1 empfängt. Der Ausgang des Komparators CO1 liefert "1"-Signale, wenn $U_A$ größer wird als SW1.

Ein anderer Eingang des NOR-Gatters 26 empfängt das Ausgangssignal des Komparators CO2, der an einem Eingang die dem Spulenstrom entsprechende Spannung $U_i$ und an seinem zweiten Eingang den Schwellenwert SW2 als Referenzsignal empfängt. Der Komparator CO2 liefert ein Ausgangssignal "1", wenn $U_i$ größer als SW2 wird.

Ein weiterer Eingang des NOR-Gatters 26 ist an den Ausgang des Komparators CO3 angeschlossen, der an einem Eingang die Eingangsspannung $U_E$ und an seinem Referenzeingang den Schwellenwert SW3 empfängt. Der Komparator CO3 liefert ein Ausgangssignal "1", wenn $U_E$ größer als SW3 wird.

Ein vierter Eingang des NOR-Gatters 26 ist mit dem Ausgang des Komparators CO4 verbunden, der an einem Eingang die Spulenspannung $U_L$ und an seinem Referenzeingang den Schwellenwert SW4 empfängt. Der Komparator CO4 liefert ein Ausgangssignal "1", wenn $U_L$ größer als SW 4 wird.

Wenn eines der Signale $U_I$, $U_E$, $U_L$ oder $U_A$ den zugehörigen Schwellenwert übersteigt, wird der Schalter T2 zwangsweise in den nichtleitenden Zustand geschaltet bzw. in diesem Zustand belassen, unabhängig von dem jeweiligen Ausgangssignal des Komparators COT. Auf diese Weise führen zu hohe Spannungen bzw. zu hohe Ströme an irgendwelchen Stellen des Sperrwandlers 13' zur Sperrung von T2. Diese Sperrung wird beendet, wenn die überwachte Größe wieder unter ihren Schwellenwert abgefallen ist.

Wenn die Ausgangsspannung $U_A$ kleiner als ein vorgegebener Schwellenwert SW5 ist, oder wenn eine schnelle Änderung von $U_A$ in Richtung kleinerer Werte erfolgt, wird das Tiefpaßfilter TP überbrückt. Hierdurch wird die Regelung der Ausgangsspannung $U_A$ schneller; der Sollwert wird in sehr kurzer Zeit wieder erreicht. Ist die Störung behoben, wird das Tiefpaßfilter TP selbsttätig wieder zugeschaltet, indem der Schalter T3 in den nicht-leitenden Zustand geschaltet wird. Die Überbrückung des Tiefpaßfilters ist insbesondere beim Einschaltvorgang der Leuchtstofflampe wichtig, da beim Zünden der Leuchtstofflampe ein hoher Lastsprung am Ausgang auftritt, wodurch die Ausgangsspannung $U_A$ absinkt. Durch die Überbrückung des Tiefpaßfilters wird erreicht, daß $U_A$ den Sollwert schneller wieder erreicht. Der Schalter T3 wird von dem Ausgangssignal eines Komparators CO5 gesteuert, der an einem Eingang die Spannung $U_A$ und am anderen Eingang den Schwellenwert SW5 empfängt. Der Komparator C05 steuert den Schalter T3 in den leitenden Zustand, wenn $U_A$ kleiner als der Schwellenwert SW5 wird.

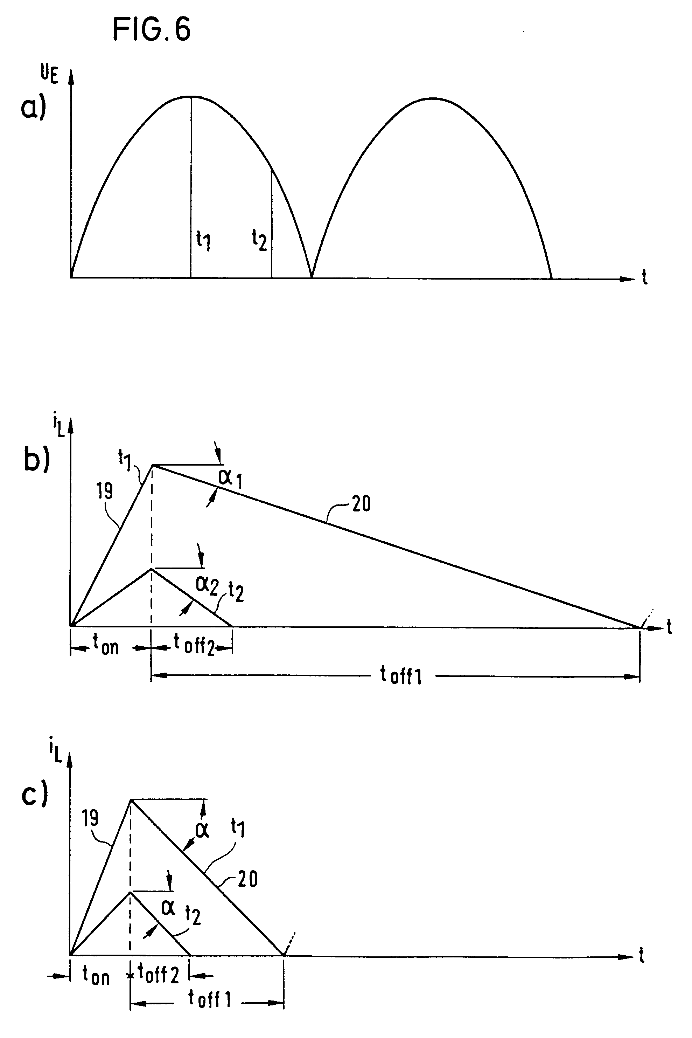

Unter Bezugnahme auf Fig. 6 wird nachstehend ein wesentlicher Vorteil des Ausführungsbeispiels der Fig. 4 und 5 gegenüber dem Ausführungsbeispiel von Fig. 1 erläutert.

Zunächst sei darauf hingewiesen, daß die Frequenz f der Impulse des Spulenstroms möglichst hoch sein sollte, damit bei gleicher Leistung des Verbrauchers der Spitzenstrom durch die Reihenschaltung möglichst klein sein kann. Bei kleinem Spitzenstrom kann die Baugröße der Induktivität klein sein.

Fig. 6a zeigt den zeitlichen Verlauf der Eingangsspannung $U_E$ des Sperrwandlers 13 bzw. 13'. Hierbei seien die Stromimpulse zu den Zeitpunkten $t_1$ und $t_2$ betrachtet.

Fig. 6b zeigt den Spulenstrom $i_L$ während eines Stromimpulses bei dem Hochsetzsteller der Fig. 1. Bei dem Stromimpuls, der zur Zeit $t_1$, also bei hoher Eingangsspannung, erzeugt wird, hat die Anstiegsflanke 19 die gleiche Dauer $t_{on}$ wie bei dem Stromimpuls, der zum Zeitpunkt $t_2$, also bei geringer Amplitude der Eingangsspannung, erzeugt wird. Die Maximalwerte der Stromimpulse unterscheiden sich entsprechend dem Amplitudenverhältnis der Eingangsspannungen. Die Rückflanken 20 haben in beiden Fällen unterschiedliche Dauern $t_{off1}$ bzw. $t_{off2}$. Dies liegt daran, daß der Neigungswinkel $\alpha$ bei dem Ausführungsbeispiel der Fig. 1

$$\alpha = \arctan \frac{U_A - U_E}{L}$$

ist, wobei L die Induktivität der Spule ist. Da $U_A$ als konstant angenommen werden kann, ist das Gefälle der Rückflanke 20 von der Größe von $U_E$ abhängig, so daß sich zu den Zeitpunkten $t_1$ und $t_2$ unterschiedliche Neigungswinkel $\alpha_1$ und $\alpha_2$ ergeben. Die Ausschaltzeiten $t_{off}$ variieren also nicht nur proportional zu $U_E$, sondern sie verlängern sich überproportional, wodurch die Frequenz der Stromimpulse während jeder Halbperiode von $U_E$ hohen Schwankungen unterworfen ist.

Fig. 6c zeigt die gleichen Verhältnisse bei dem Sperrwandler der Fig. 4, bei dem während der Ausschaltzeiten $t_{off}$ von T2 die Induktivität parallel zur Ausgangsspannung $U_A$ liegt. In diesem Fall ist während der Ausschaltzeiten der Neigungswinkel $\alpha$ der Rückflanke 20

$$\alpha = \arctan \frac{U_A}{L} \cdot$$

Dieser Wert ist, da die Ausgangsspannung $U_A$ konstant ist, ebenfalls konstant. Die Rückflanken 20 haben also zu beiden Zeiten $t_1$ und $t_2$ die gleiche Neigung $\alpha$. Zwar ergibt sich auch gemäß Fig. 6c eine entsprechend der Amplitude der Eingangsspannung $U_E$ variierende Frequenz der Stromimpulse, jedoch sind die Frequenzänderungen geringer und insbesondere ist die mittlere Frequenz der Impulse größer als bei dem ersten Ausführungsbeispiel. Dadurch kann eine Spule mit geringerer Baugröße benutzt werden. Ferner ist zu berücksichti-

gen, daß die Einschaltzeit $t_{on}$ bei dem zweiten Ausführungsbeispiel kürzer ist als beim ersten Ausführungsbeispiel.

**Patentansprüche**

1. Gleichspannungsversorgungsschaltung für Leuchtstofflampen, mit einem Sperrwandler (13, 13') zur Erzeugung einer Gleichspannung konstanter Höhe aus einer Versorgungsspannung, wobei der Sperrwandler eine Induktivität (16) enthält, welche durch einen Schalter in Intervallen zum Aufladen an die Versorgungsspannung angeschaltet und danach über eine Diode (17) auf einen die Gleichspannung liefernden Kondensator (18) entladen wird, **dadurch gekennzeichnet**, daß in einer Eingangsleitung (11) des Sperrwandlers (13, 13') ein Schalter (T2) zur Spannungsbegrenzung vorgesehen ist, der von einem auf die Ausgangsspannung ($U_A$) des Sperrwandlers reagierenden Spannungssensor (CO1) in den Sperrzustand gesteuert wird, solange die Ausgangsspannung ($U_A$) einen vorgegebenen ersten Schwellenwert (SW1) übersteigt.

2. Gleichspannungsversorgungsschaltung nach Anspruch 1, dadurch gekennzeichnet, daß der Sperrwandler (13') ein Schaltregler mit Spannungsumkehr ist, bei dem der die Aufladung und Entladung der Induktivität (16) steuernde Schalter (T2) in einer Eingangsleitung (11) liegt, und daß dieser Schalter (T2) in Abhängigkeit von dem durch die Induktivität (16) fließenden Strom ($i_L$) leitend gesteuert wird, wenn die Ausgangsspannung ($U_A$) unterhalb des Schwellenwertes (SW1) liegt, und gesperrt wird, wenn die Ausgangsspannung ($U_A$) den ersten Schwellenwert (SW1) übersteigt.

3. Gleichspannungsversorgungsschaltung nach Anspruch 1 oder 2, dadurch gekennzeichnet, daß der Schalter (T2) zur Spannungsbegrenzung von einem auf den Strom in einer Eingangsleitung (11) des Sperrwandlers reagierenden Stromsensor (CO2) derart gesteuert ist, daß er sperrt, wenn der Strom einen vorgegebenen zweiten Schwellenwert (SW2) übersteigt.

4. Gleichspannungsversorgungsschaltung nach einem der Ansprüche 1 bis 3, dadurch gekennzeichnet, daß der Schalter (T2) zur Spannungsbegrenzung von einem auf die Eingangsspannung ($U_E$) des Sperrwandlers reagierenden Spannungssensor (CO3) derart gesteuert ist, daß er sperrt, wenn die Eingangsspannung ($U_E$) einen vorgegebenen dritten Schwellenwert (SW3) übersteigt.

5. Gleichspannungsversorgungsschaltung nach einem der Ansprüche 1 bis 4, dadurch gekennzeichnet, daß der Sperrwandler (13, 13') eine Steuerschaltung (22-24, RG, COT) enthält, die den Schalter (T1; T2) zum Aufladen und Entladen der Induktivität in den leitenden Zustand steuert, wenn die Spannung ($U_L$) bzw. der Strom ($i_L$) der Induktivität (16) am Ende einer Sperrphase Null wird, und daß die Steuerschaltung einen Zeitgeber (RG, COT) enthält, der den Schalter über eine von der Ausgangsspannung ($U_A$) abhängige Dauer im leitenden Zustand hält.

6. Gleichspannungsversorgungsschaltung nach Anspruch 5, dadurch gekennzeichnet, daß die Ausgangsspannung ($U_A$) dem Zeitgeber (RG, COT) über ein Tiefpaßfilter (TP) zugeführt wird, dessen Zeitkonstante mindestens etwa einer Halbperiode der Eingangs-Wechselspannung entspricht.

7. Gleichspannungsversorgungsschaltung nach Anspruch 6, dadurch gekennzeichnet, daß das Tiefpaßfilter (TP) überbrückt wird, wenn die Ausgangsspannung ($U_A$) einen vorgegebenen weiteren Schwellenwert (SW5) unterschreitet.

8. Gleichspannungsversorgungsschaltung nach einem der Ansprüche 1 bis 7, dadurch gekennzeichnet, daß das der Diode (17) abgewandte Ende der Induktivtät (16), das mit einem Anschluß des Kondensators (18) verbunden ist, an einem Referenzpotential liegt und daß sämtliche Potentiale, die mit einem Schwellenwert verglichen werden, in bezug auf das Referenzpotential definiert sind.

**Claims**

1. DC supply circuit for fluorescent lamps, comprising a flyback converter (13, 13') for generating a d.c. voltage of constant level from a supply voltage, the flyback converter containing an inductivity (16) which, by a switch, is connected in intervals for charging to the supply voltage and which subsequently is discharged via a diode (17) onto a capacitor (18) supplying the d.c. voltage, **characterized in that** there is provided in an input line (11) of the flyback converter (13,13') a switch (T2) for voltage limitation, which, by a voltage sensor (C01) being responsive to the output voltage ($U_A$) of the flyback converter, is switched into the off-state as long as the output voltage ($U_A$) exceeds a predetermined first threshold value (SW1).

2. DC voltage supply circuit as defined in claim 1, characterized in that the flyback converter (13') is a switching regulator with voltage reversal in which the switch (T2) for controlling the charging and discharging of inductivity (16) is arranged in an input line (11) and that said switch (T2) is switched to the conductive state, responsive to the current ($i_L$) flowing through the inductivity (16), if the output voltage ($U_A$) is below the threshold value (SW1) and is turned off if the output voltage ($U_A$) exceeds the first threshold value (SW1).

3. DC voltage supply circuit as defined in claim 1 or 2, characterized in that the switch (T2) for voltage limitation is controlled by a current sensor (CO2) responsive to the current in an input line (11) of the flyback converter so that the switch (T2) is blocked if the current exceeds a predetermined second threshold value (SW2).

4. DC voltage supply circuit as defined in any one of claims 1 to 3, characterized in that the switch (T2) for voltage limitation is controlled by a voltage sensor (CO3) responding to the input voltage ($U_E$) of the flyback converter so that the switch (T2) is blocked if the input voltage ($U_E$) exceeds a predetermined third threshold value.

5. DC voltage supply circuit as defined in any one of claims 1 to 4, characterized in that the flyback converter (13,13') contains a control circuit (22-24,RG, COT) causing the switch (T1;T2) to assume the conductive state for charging and discharging of the inductivity (16), if the voltage ($U_L$) or the current ($i_L$) of the inductivity becomes zero at the end of an off-phase, and that the control circuit contains a timer (RG,COT) by which the switch is maintained conductive for a time dependent upon the output voltage ($U_A$).

6. DC voltage supply circuit as defined in claim 5, characterized in that the output voltage ($U_A$) is fed to the timer (RG,COT) through a low-pass filter (TP) whose time constant corresponds to about at least a half cycle of the input a.c. voltage.

7. DC voltage supply circuit as defined in claim 6, characterized in that the low-pass filter (TP) is bridged if the output voltage ($U_A$) falls below a predetermined further threshold value (SW5).

8. DC supply voltage circuit as defined in any one of claims 1 to 7, characterized in that the end of the inductivity (16) averted from the diode (17) and connected to a terminal of the capacitor (18) is at a reference potential and that all potentials which are compared to a threshold value are defined with respect to the reference potential.

## Revendications

1. Circuit d'alimentation de courant continu pour lampes fluorescentes, avec un transformateur à blocage (13, 13') destiné à engendrer une tension continue à niveau constant à partir d'une tension d'alimentation, le transformateur à blocage contenant une inductance (16) qui, par un interrupteur, est connectée, à intervalles, à la tension d'alimentation, pour se charger et, ensuite, par une diode (17), est déchargée sur un condensateur (18) fournissant la tension continue, circuit caratérisé en ce qu'il est prévu, dans un conducteur d'entrée (11) du transformateur à blocage (13, 13'), un interrupteur (T2), destiné à limiter la tension, qui est commandé, par un détecteur de tension (CO1) réagissant à la tension de sortie ($U_A$) du transformateur à blocage, pour passer à l'état de blocage tant que la tension de sortie ($U_A$) excède une première valeur de seuil (SW1) préétablie.

2. Circuit d'alimentation de courant continu suivant la revendication 1, caractérisé en ce que le transformateur à blocage (13') est un régulateur de commutation à inversion de tension, dans lequel l'interrupteur (T2) commandant la charge et la décharge de l'inductance (16) se trouve dans un conducteur d'entrée (11) et que, en fonction du courant ($i_L$) passant par l'inductance (16), cet interrupteur (T2) est commandé pour passer à l'état conducteur lorsque la tension de sortie ($U_A$) se situe au-dessous de la valeur de seuil (SW1) et est bloqué lorsque la tension de sortie ($U_A$) excède la première valeur de seuil (SW1).

3. Circuit d'alimentation de courant continu suivant la revendication 1 ou 2, caractérisé en ce que, pour limiter la tension, l'interrupteur (T2) est commandé par un détecteur de courant (CO2) réagissant au courant dans un conducteur d'entrée (11) du transformateur à blocage de telle manière qu'il passe à l'état blocage lorsque le courant excède une seconde valeur de seuil (SW2) préétablie.

**4.** Circuit d'alimentation de courant continu suivant l'une des revendications 1 à 3, caractérisé en ce que, pour limiter la tension, l'interrupteur (T2) est commandé par un détecter de tension (CO3) réagissant à la tension d'entrée ($U_E$) du transformateur à blocage de telle manière qu'il passe à l'état bloqué lorsque la tension d'entrée ($U_E$) excède une troisième valeur de seuil (SW3) préétablie.

**5.** Circuit d'alimentation de courant continu suivant l'une des revendications 1 à 4, caractérisé en ce que le transformateur à blocage (13,13') contient un circuit de commande (22-24, RG, COT) qui commande l'interrupteur (T1 ; T2), pour la charge et la décharge de l'inductance, à l'état de conduction lorsque la tension ($U_L$) ou le courant ($i_L$) de l'inductance (16) devient nul à la fin d'une phase de blocage et que le circuit de commande contient un régulateur (RG, COT) qui maintient l'interrupteur à l'état de conduction pendant un temps qui est fonction de la tension de sortie ($U_A$).

**6.** Circuit d'alimentation de courant continu suivant la revendication 5, caractérisé en ce que la tension de sortie ($U_A$) est amenée au régulateur (RG, COT) par un filtre passe-bas (TP) dont la constante de temps correspond au moins à environ une demi-période de la tension alternative d'entrée.

**7.** Circuit d'alimentation de courant continu suivant la revendication 6, caractérisé en ce que le filtre passe-bas (TP) est ponté lorsque la tension de sortie ($U_A$) descend au-dessous d'une autre valeur de seuil (SW5) préétablie.

**8.** Circuit d'alimentation de courant continu suivant l'une des revendications là 7, caractérisé en ce que l'extrémité de l'inductance (16) opposée à la diode (17), qui est reliée à une borne du condensateur (18), se trouve à un potentiel de référence et que tous les potentiels, qui sont comparés à une valeur de seuil, sont définis par rapport au potentiel de référence.

FIG 1

FIG.2

FIG.3

FIG.4

## FIG.5

## FIG.6